# EUROPEAN PATENT APPLICATION

(11) **EP 3 872 406 A1**
(43) Date of publication of application: **01.09.2021**
(21) Application number: 21000058.4
(22) Date of filing: 25.02.2021
(51) Int. Cl.: F24D 3/14, B29C 45/26, F16L 3/04

(54) **CLIPS PACKET, TOOL FOR MAKING CLIPS PACKET AND METHOD FOR MANUFACTURING CLIPS PACKET**

(30) Priority: 28.02.2020 PL 43309320
(71) Applicant: Aquer, 32-708 Dziewin (PL)
(72) Inventor: Jaroslaw, Kram, 32-711 Bogucice (PL); Maciej, Dyba, 32-700 Bochnia (PL)
(74) Representative: Hubisz, Ryszard

(57) **Abstract**

The pack (1) of clips (2) made of plastic comprises at least two clips (2) connected to each other by at least one bridge (3). The clips (2) have a U-shape at the end view, the free arms of which are pointed at the ends (7). The tool for producing a pack of clips by injection moulding is in the form of an injection mould for plastics, the injection mould has at least one mould cavity with clip chambers, containing an insert, conventionally called the upper insert, reproducing the outer shape of the pack (1) and an insert, called the lower insert, an insert reproducing the outer surface of the protruding sharp tips (6) of the clips (2) and a core located in the lower insert, reproducing the inner shape of the pack (1) and the side surfaces (15) of the arms of the clips (2).

The method of producing a pack (1) of clips (2) by means of an injection mould consists in injecting a polymer from the polyolefin group into the injection mould, with a shrinkage of 1.5 - 1.75% at a temperature of 190°C - 210°C under a pressure of 800 bar - 1000 bar.

## Description

The present invention relates to a pack of clips, a tool for producing a pack of clips and a method of producing a pack of clips, used to attach elements to the substrate, the cross-sections of which, at least in part, have arches, for example for fixing heating pipes for underfloor heating.

Modern underfloor heating systems require the installation of heating pipes under the floor surface.

The underfloor heating system consists in placing an insulating layer on the screed, usually made of polystyrene. A system of heating pipes is then laid over the polystyrene, which are covered with a layer of appropriate poured concrete, creating a heating system.

Before pouring the concrete, the heating pipes need to be temporarily attached to the polystyrene base, due to the need to maintain their proper position and avoid any inconvenience when pouring the concrete layer.

The easiest and cheapest way to attach the heating pipes to the polystyrene layer is with clips, usually made of plastic.

The clips, in a number from several to several dozen pieces, are made in a horizontal position by injection in moulds, the division of which runs along their transverse axis. Upon removal from the mould, the clips, separated from the injection system, constitute a loose set.

The use of the clips is actually so simple that it is possible to manually push them into the polystyrene. In order to facilitate and speed up this operation, a type of stapler called a taker was developed.

It is a simple punch-type device that pushes the clips fed from the feeder. The feeder is a kind of slightly arcuate guide, on which the clips are pressed with a weight. Pressing the punch causes a single clip to be pressed into the polystyrene in the desired place.

Since applying individual clips was laborious and cumbersome, an attempt was made to solve the problem by combining the clips into sets or packs.

Such an operation most often consisted in joining the above-described individual clips into packs with the use of adhesive tape, guided along the spine of the clips arranged in a pack.

The clips were also joined into a pack by welding the crests of the clips arranged in a pack or by thin wire joining through holes in specially made protrusions in the upper part of the clips. This connection was broken by the punch of the taker when it was pressed.

The problem was the necessity to perform a separate technological process consisting in combining individual clips into packs.

The object of the present invention is to produce a pack of clips that can be easily used to fasten pipes and other elements with rounded surfaces, for example pipes for underfloor heating. Another object of the invention is to provide a tool for producing the clip pack which would provide the appropriate design of the clip pack, as well as a suitable method that would allow for simple and cost-effective manufacturing of the clip pack.

According to the invention, this is solved, on the one hand, by a clip pack with the features of claim 1 and, on the other hand, by tools with the features of claim 6, as well as by a method with the features of claim 8. The preferred embodiments are set out in the dependent claims, the description and the figures.

The inventive clip pack, which is made of injection-moulded plastic, is characterised in the descriptive part of claim 1.

Furthermore, the tool according to the invention for producing a pack of clips by injection moulding is characterised by the descriptive part of claim 6.

On the other hand, the inventive method for producing a pack of clips is characterised by the descriptive part of claim 8.

The idea of the invention is a pack of clips made of plastic by injection moulding for the fastening of elements with rounded cross-sections and comprises at least two clips connected to each other, having a U-shaped front view, with arms connected by an arcuate portion and whose free ends of the arms are tipped with pointed tips characterised by the fact that the clips are connected in the arcuate part by at least one bridge with a cross-sectional area ranging from 0.02 to 0.3 of the cross-sectional area of the arcuate part of the clip and a height H ranging from 0.02 to 0.3 of height H₁ at the thickest point of the arcuate part.

Preferably, the clips are connected in the arcuate part by at least two bridges with a cross-sectional area of 0.02 to 0.3 of the cross-sectional area of the arcuate part of the clip and a height H of 0.02 to 0.3 of the height H₁ at the thickest point of the arcuate part, with the height H of the bridge 3 being 0.1 mm to 1.0 mm.

Additionally, the clips may have a reinforcing rib on the arcuate portion, while the pointed ends with their lower ends, when viewed from the front, may have the shape of hooks, and the pointed ends with their upper ends angled back may have outer surfaces that deviate from the arms by an angle α less than 90°.

The invention also relates to a tool for producing a pack of clips by injection moulding, in the form of an injection mould for plastics, characterised by the fact that the injection mould has at least one mould cavity with clip chambers, containing an insert, conventionally called the upper insert, reproducing the outer shape of the pack to the places corresponding to the ends of the protruding sharp tips of the clips and the insert, conventionally called the lower insert, reproducing the outer surface of the protruding sharp tips of the clips, and the core located in the lower insert, recreating the internal shape of the pack and the side surfaces of the clip arms, the clip chambers, each having the shape of the U-shaped pack clip in the end view, are connected by an injection channel through which the material is supplied, the injection channel has individual feed channels, routed to the surfaces reproducing the outer surfaces of the protruding sharp tips of the clips, connected to each other, an injection channel running on one side of the clip chambers along the entire length of the inserts and additional channels connecting the clip chambers in the area of the arcuate parts and having a cross-section of 0.02 to 0.3 of the cross-sectional area of the arcuate part of the clip, and after closing the injection mould, its dividing line extends between the inserts to a point corresponding to the end of the upper end and then over the walls reproducing the side walls to a point corresponding to the lower end of the pointed end of the clip arm.

Preferably, the distance between the walls of adjacent clip chambers is 0.1 to 0.2 of the width of a single clip chamber, measured along the longitudinal axis of the clip chambers reproducing the clip pack.

Moreover, the invention also relates to a method for producing a clip pack, which is characterised by the fact that a polymer from the polyolefin group is injected, having a shrinkage of 1.5 - 1.75% at a temperature of 190 - 210°C and a pressure of 800 - 1000 bar.

The object of the invention is achieved by assembling the clips into a pack in the region of the arched portions with a web having a cross-sectional area of 0.02 to 0.3 of the cross-sectional area of the clip arm. The thickness "H" of the bridge is 0.15 to 0.25 mm. In addition, the clip has a reinforcing rib on the arcuate part. The arms of the clip terminate in hook-shaped sharp tips in an end view, which, in the side view, are shaped like a pyramid with an angle of less than 90°.

A tool for producing a pack of clips in the form of an injection mould for plastics has clip chambers, each of which is shaped like a clip having a U-shape of the pack in the end view. The clip chambers are connected by an injection channel through which the material is supplied, the injection channel having individual supply channels extending to the outer surfaces of all the clip tips on the injection channel side. The injection channel runs along one side of the clip chambers over the entire length of the inserts. Additional channels connecting the clip chambers in the area of the arcuate parts and having a cross-sectional area of 0.02 to 0.3 of the clip-leg chamber cross-sectional area. After closing the injection mould, its dividing line runs between the insert and the insert to the top of the clip tips and then along the side walls to the top of the pyramids. The distance between the walls of adjacent clip chambers is 0.1 to 0.2 of the width of the clip chamber measured along the longitudinal axis of the clip pack.

The method of production consists in injecting a polymer from the group of high-density polyolefins with 1.5 - 1.75% shrinkage at a temperature of 190 - 210°C under a pressure of 800 - 1000 bar into the above-mentioned mould for plastics, which has at least one mould cavity comprising an insert reproducing the outer shape of the pack to the tip of the clips and an insert reproducing the outer surface of the tip of the clips and a core residing in the insert imitating the inner shape of the pack and the side surfaces of the clips. The clip chambers, each shaped like a clip having a U-shaped pack in the front view, are connected by an injection channel through which the material is supplied. The injection channel has individual supply channels extending to the outer surfaces of all clip ends on the injection channel side. The injection channel runs on one side of the clip chambers over the entire length of the inserts. Additional channels connecting the clip chambers in the area of the arcuate parts and having a cross-sectional area of 0.02 to 0.3 of the clip-leg chamber cross-sectional area. After closing the injection mould, its dividing line runs between the inserts to the top of the clip tips and then along the side walls to the sharp tips.

The subject matter of the invention will be described below on the basis of preferred embodiments and application, which are shown in the drawings, in which:
Fig. 1 presents a clip pack with reinforcing ribs;
Fig. 2 presents the cross-section of the pack along the line A-A in Fig. 1;
Fig. 3 presents detail A from Fig. 2;
Fig. 4 presents a clip pack without reinforcing ribs;
Fig. 5 presents the cross-section of the pack along the line A1-A1 in Fig. 4;
Fig. 6 presents detail A1 from Fig. 5;
Fig. 7 presents a clip pack equipped with reinforcing ribs, connected with two bridges;
Fig. 8 presents the cross-section of the pack along the line A2-A2 in Fig. 7;
Fig. 9 presents detail A2 from Fig. 8;
Fig. 10 presents an axonometric view of the injection mould in the embodiment of a clip pack with ribs, as in Fig. 1;
Fig. 11 presents the injection mould in an end view;
Fig. 12 presents the injection mould in a semi cross-section along the line B-B from Fig. 10;
Fig. 13 presents detail B from Fig. 12;

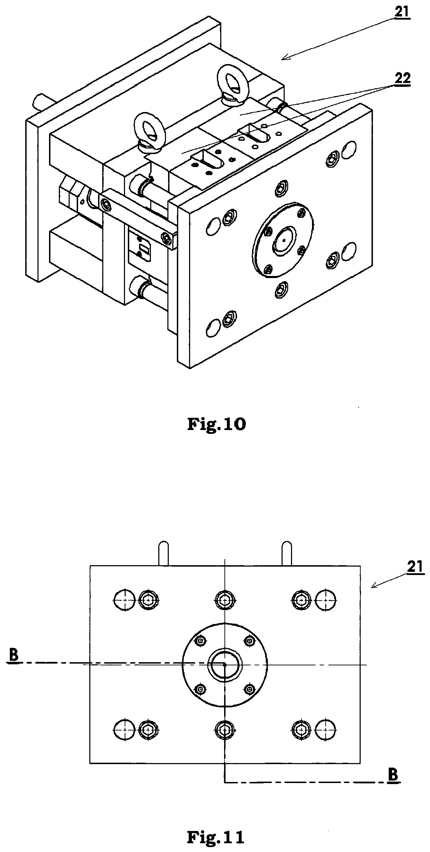

Fig. 11 presents an axonometric view of an insert with individual inlet channels to the injection mould from Fig. 10 and Fig. 11;

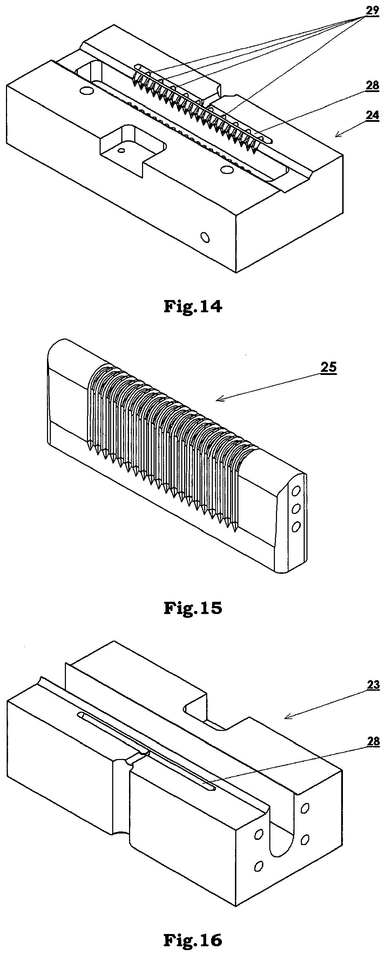

Fig. 15 presents an axonometric view of the core forming the injection mould from Fig. 10 and Fig. 11;
Fig. 16 presents an axonometric view of the insert closing the injection mould from Fig. 10 and Fig. 11; and
Fig. 14 presents an axonometric exploded view of the mould cavity of the injection mould from Fig. 10 and Fig. 11.

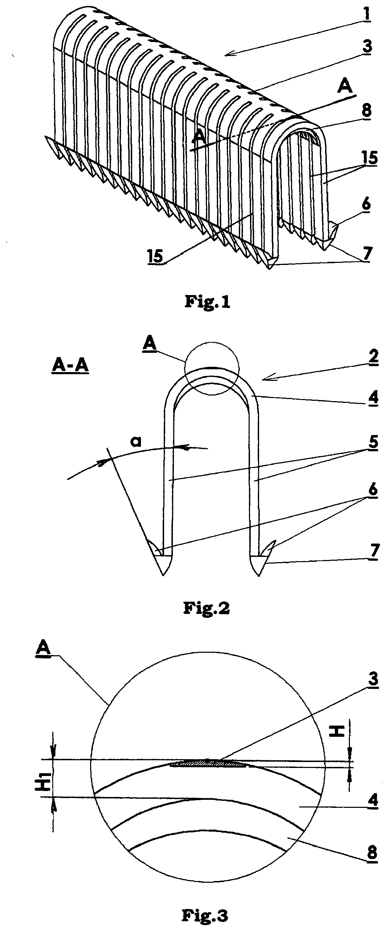

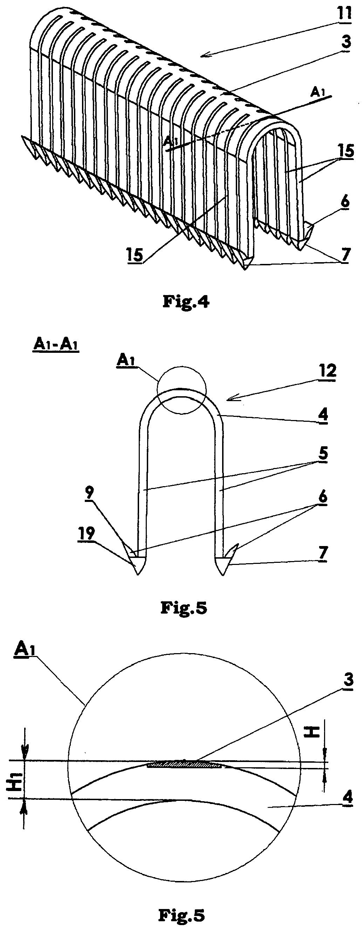

Pack 1 or pack 11, as shown in Fig. 1 and Fig. 4, consists of clips, 2 or 12, respectively, as shown in Fig. 2 and Fig. 5. Each of the clips of the pack is connected to an adjacent clip by a bridge 3.
In one embodiment, the bridge has a height H of 0.19 mm, measured from the base of the bridge in the cross-section to the highest point of the top of the arcuate part 4 of clips 2 or 12. In other embodiments, the bridge has a height of 0.1 mm, and in still other embodiments, it has a height that increases from 0.1 mm in increments of 0.05 mm to 1.0 mm. It can also be said that the clips 2, 12 are connected to each other by a bridge that holds the individual clips together. In exemplary embodiments, the cross-sectional area of the bridge has an area of 0.02 to 0.3 of the cross-sectional area of the arcuate part of the clip 2, 12 and the height H of 0.02 to 0.3 of the height H₁ measured at the thickest point of the arcuate part 4 of the clip.

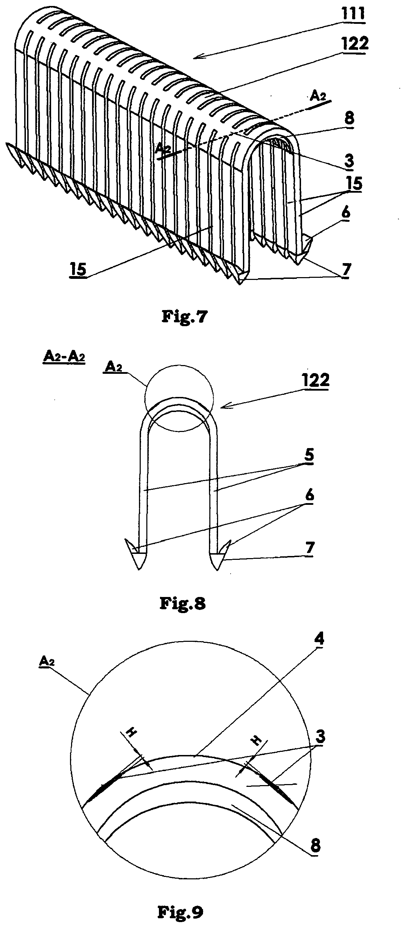

In another embodiment, Fig. 7 shows a pack 111 consisting of clips 122 shown in Fig. 8 connected by two bridges 3 shown in Fig. 9.

The clips 2 or 12 or 122 are U-shaped with arms 5 with side surfaces 15. In one embodiment, the arms are ended with sharp tips 6 in the shape of hooks. The pointed tips 7 with their lower ends in a front view, which is a side view of the pack of clips, are in the shape of hooks, the pointed tips 7 having upwardly angled upper ends 9, which have surfaces 19 at an angle of 25° to the arm. Basically, the pointed tips 7 with their upper ends 9 angled off have outer surfaces 19 which are deviated from the arms 5 by an angle α of less than 90°. The clip 2 on the inner surface of the arcuate part 4 is additionally provided with a reinforcing rib 8.

The tool for producing a pack of clips is shown in an embodiment of a pack 1 of clips 2 connected to each other over their entire length by bridges 3, as shown in Fig. 1, Fig. 2 and Fig. 3.

The pack 1 of clips 2, connected over their entire length by bridges 3, is made in the injection mould 21 shown in Fig. 10, provided with two moulding seats 22.

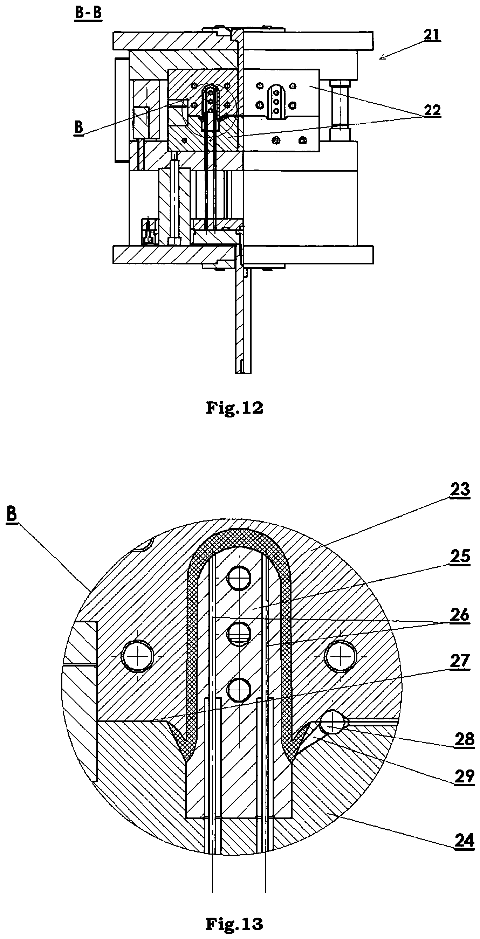

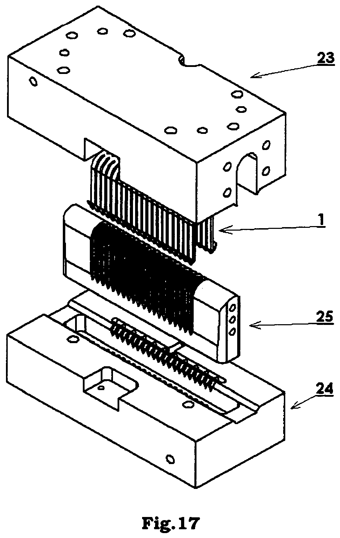

The mould cavities 22 of the injection mould 21 have an upper insert 23, shown in Fig. 13, Fig. 16 and Fig. 17, reproducing the outer shape of the pack 1, 11, and 111 to the places corresponding to the ends 9 of the protruding sharp tips 6 of the clips 2, 22 and 122 and the insert 24, shown in Fig. 13, Fig. 14 and Fig. 17, reproducing the outer surface of the sharp tips 7, tips 6 of the clips 2.

Within the insert 24 is a core 25, shown in Fig. 13, Fig. 15 and Fig. 17, with ejectors 26 reproducing the inner shape of the pack 1, the side surfaces of the clips 2 and the bridges 3.

Thus, a mould 21 dividing line 27 runs between the insert 23 and the insert 24 to the point corresponding to the top end and then over the side walls to the point corresponding to the bottom end of the sharp tip 7 of the arm 5 of the clip 2, 12, 122, as shown in Fig. 13.

On one side of the pack 1, i.e. on one side of the clip chambers, along the entire length of the inserts 23 and 24, there is a plastic injection channel 28 with individual supply channels 29 leading to the surface, reproducing the outer surfaces of the protruding sharp tips 6, connected to the injection channel 28.

For the production of the clip pack 11 and the clip pack 111 of the clips 122, it is only necessary to replace the core 25 in the mould cavities 22 of the mould 21 with a core corresponding to the internal shape of the pack 11 or the pack 111.

In the embodiment shown, plastic is injected into the mould cavities 22 of the injection mould 21 for plastics via the injection channel 28. The most commonly used plastic is a polymer from the polyolefin group, for example high-density polyethylene (HDPE). In one embodiment, a polyolefin polymer with a shrinkage of 1.5% - 1.75% at 190 - 210°C and 800 - 1000 bar is injected into the mould. Preferably, the material is injected with a shrinkage of 1.75% at a temperature of 200°C and a pressure of 900 bar.

The polyolefin polymer of channel 28 is injected through feed channels 29 to each tip 7 of the clips 2 separately, which connect at the top of the clips 2 to form a bridge 3 that integrates the clips 2 into the pack 1.

In this way, the clips 2 are connected firmly enough to form the bundle 1 but are still weak enough that the punch of the taker easily separates them from each other during the operation of driving the clips into a substrate, for example polystyrene.

### List of reference numbers

- 1, 11, 111: pack
- 2, 12, 122: clips
- 3: bridge
- 4: arch
- 5: arms
- 6: sharp tips
- 7: pointer tip
- 8: ribs
- 9: top ends
- 15: side surfaces
- 19: internal surfaces
- 21: injection mould
- 22: mould cavities
- 23: insert
- 24: insert
- 25: core
- 26: ejectors
- 27: division line
- 28: injection channel
- 29: feed channels

## Claims

1. A pack (1, 11, 111) of clips (2, 12, 122) made of plastic by injection moulding for securing elements with rounded cross-sections and comprising at least two clips (2, 12, 122) connected to each other with a U-shape in the front view, having arms (5) with the free ends of the arms (5) terminating in pointed ends (7), **characterised in that** each of the clips (2, 12, 122) is connected to an adjacent clip in the arcuate part (4) with at least one bridge (3) with a cross-sectional area of 0.02 to 0.3 of the cross-sectional area of the arcuate portion (4) of the clip (2, 12, 122) and a height (H) ranging from 0.02 to 0.3 of the height (H₁) measured at the thickest point of the arcuate part (4).

2. Pack according to claim 1, **characterised in that** the clips (122) are connected in the arcuate part (4) by at least two bridges (3) with a cross-sectional area of 0.02 to 0.3 times the cross-sectional area of the arcuate part (4) of the clip (2, 12) and a height (H) ranging from 0.02 to 0.3 of the height (H₁) measured at the thickest point of the arcuate part (4).

3. Pack according to claim 1 or 2, **characterised in that** the height (H) of the bridge (3) is 0.1 mm to 1.0 mm.

4. Pack according to claim 1, 2 or 3, **characterised in that** the clips (2) have a reinforcing rib (8) on the arcuate part (4).

5. Pack according to claim 1, 2, 3 or 4, **characterised in that** the pointed ends (7) with their lower ends, in the front view of the pack, have the shape of hooks, and the pointed ends (7) with their upper ends (9) bent off have outer surfaces (19) which deviate from the arms (5) by an angle (a) less than 90°.

6. Tool for producing a pack of clips by injection moulding according to claim 5 in the form of an injection mould for plastics, **characterised in that** the injection mould has at least one mould cavity (22) with clip chambers, containing an insert (23), conventionally called the upper insert, reproducing the outer shape of the pack (1, 11, 111) to the places corresponding to the ends (9) of the protruding sharp tips (6) of the clips (2, 12, 122) and the insert (24), conventionally called the lower insert, reproducing the outer surface (19) of the protruding sharp tips (6) of the clips (2, 12, 122), and the core (25), located in the lower insert (24), recreating the internal shape of the pack (1, 11, 111) and the side surfaces (15) of the clip (2) arms (5), and the clip chambers, each having the shape of the U-shaped pack clip in the end view, are connected by an injection channel (28) through which the material is supplied, and the injection channel (28) has individual feed channels (29), routed to the surfaces reproducing the outer surfaces (19) of the protruding sharp tips (6) of the clips (2, 12, 122), connected to an injection channel (28) running on one side of the clip chambers along the entire length of the inserts (23) and (24) and additional channels connecting the clip chambers in the area of the arcuate parts and having a cross-section of 0.02 to 0.3 of the cross-sectional area of the arcuate part (4) of the clip (2, 12, 122), and after closing the injection mould, its dividing line extends between the insert (23) and insert (24) to a point corresponding to the end of the upper end (9) and then over the walls reproducing the side walls to a point corresponding to the lower end of the pointed end (7) of the clip (2, 12, 122) arm (5).

7. Tool for producing a pack of clips according to claim 6, **characterised in that** the distance between the walls of adjacent clip chambers is 0.1 to 0.2 of the width of a single clip chamber, measured along the longitudinal axis of the clip chambers reproducing the clip pack (1, 11, 111).

8. Method for producing a pack (1, 11, 111) of clips (2, 12, 122) with a tool according to claim 6 or 7, **characterised in that** a polymer from the polyolefin group with a shrinkage of 1.5 is injected into the injection mould for plastics with a shrinkage of 1.5 - 1.75% at a temperature of 190°C - 210°C at a pressure of 800 bar - 1000 bar.
